# EUROPEAN PATENT APPLICATION

(11) **EP 4 674 818 A1**
(43) Date of publication of application: **07.01.2026**
(21) Application number: 24186171.5
(22) Date of filing: 03.07.2024
(51) Int. Cl.: C02F 1/52, C01D 1/28, C01D 5/16, C02F 1/20, C02F 101/10, C02F 103/16, C02F 11/123

(54) **METHOD FOR TREATING SULFATE IN INDUSTRIAL PROCESSES**

(71) Applicant: Umicore Battery Materials Finland Oy, 67900 Kokkola (FI)
(72) Inventor: TUIKKA, Matti, 67900 Kokkola (FI); ERIKSSON, Mårten, 67900 Kokkola (FI); MARJELUND, Janne, 67900 Kokkola (FI)
(74) Representative: Umicore RDI Patent Department

(57) **Abstract**

Disclosed a method for treating sulfate in an industrial process, the method comprising admixing anhydrous ammonia and a first aqueous solution containing potassium sulfate, thereby obtaining a first slurry comprising a solid phase and a liquid phase, said solid phase comprising precipitated sulfate and said liquid phase comprising ammonia in dissolved form, wherein the first slurry and/or the liquid phase has an ammonia concentration of at least 150 g/l, as determined by titration at room temperature; and removing the solid phase from the first slurry.

## Description

### TECHNICAL FIELD

Generally, the present disclosure relates to a method for treating sulfate in industrial processes.

### BACKGROUND

In various industries, the treatment of metal sulfates with alkali hydroxides often results in the generation of alkali sulfates. These byproducts are typically considered waste process streams or solutions. An example of this can be found in the battery industry, where potassium hydroxide is used as a pH controlling agent or as a precipitant in the co-precipitation of sulfate salt-based transition metal raw materials, for preparing precursors of cathode active material. This process leaves behind a residue solution, known as a precipitation mother liquor, which contains high levels of potassium sulfate.

Considering increasing sustainability goals and rising raw material costs, there is a growing interest in finding ways to repurpose these waste process streams rather than simply discharging or landfilling them. For instance, if a waste process stream contains potassium sulfate, it could potentially be processed into a fertilizer compound. However, for this to be economically feasible, the potassium sulfate must be relatively pure and obtained at a high yield.

Currently, attempts for recovering such potassium sulfate include evaporative crystallization. In evaporative crystallization, the crystallization of potassium sulfate is resulted from the evaporation of the solvent. So, this process creates vapor and a suspension of potassium sulfate crystals in the mother liquor. However, this process is energy-intensive and time-consuming, and thus not particularly efficient. Further, some residual potassium sulfate in dissolved form may remain with the liquid. Therefore, there is a need for more efficient and effective methods for processing process streams/solutions containing potassium sulfate. This is particularly relevant in industries such as the battery industry, where potassium sulfate is produced as a by-product.

### SUMMARY OF THE PRESENT DISCLOSURE

In a first aspect, the present disclosure provides a method for treating sulfate in an industrial process, the method comprising admixing anhydrous ammonia and a first aqueous solution containing potassium sulfate, thereby obtaining a first slurry comprising a solid phase and a liquid phase, said solid phase comprising precipitated sulfate and said liquid phase comprising ammonia in dissolved form, wherein the first slurry and/or the liquid phase has an ammonia concentration of at least 150 g/l, as determined by titration at room temperature; and removing the solid phase from the first slurry.

It is found that efficient and effective precipitation of potassium sulfate from the solution containing potassium sulfate is achieved by admixing anhydrous ammonia. The addition of anhydrous ammonia in a quantity that results in an ammonia concentration of at least 150 g/l in the first slurry and/or the liquid phase, as determined by room temperature titration, facilitates a high conversion rate of sulfate from the initial solution to the resultant precipitated sulfate.

Without wishing to be bound by any theory, the present inventors have found that the enhancement of crystallization yield is achievable through the strategic modification, specifically reduction, of the solubility of potassium sulfate in a solution, which may be derived from transition metal sulfate co-precipitation reaction and said solution may be referred to as a precipitation mother liquor. This is accomplished by introducing anhydrous ammonia into the solution and thoroughly mixing until the precipitation of potassium sulfate is achieved. In other words, this process involves salting out the dissolved potassium sulfate by the addition of anhydrous ammonia until crystallization is successfully obtained. Through conducted experiments, it was observed that the method according to the present disclosure facilitates the attainment of relatively pure crystallized potassium sulfate with a remarkable yield.

Anhydrous ammonia is a compound with widespread applications across numerous industries and commercially available. It exists at atmospheric pressure and temperature in a gaseous state and dissolves readily in an aqueous solution. Utilizing anhydrous ammonia, as opposed to an ammonia aqueous solution (also known as ammonia water or ammonium hydroxide), optimizes water balance, especially when implemented on an industrial scale. This results in more effective water management.

The main embodiments are characterized in the independent claims. Various embodiments are disclosed in the dependent claims. The embodiments and examples recited in the claims and the specification are mutually freely combinable unless otherwise explicitly stated.

### DETAILED DESCRIPTION OF THE PRESENT DISCLOSURE

In the following detailed description, preferred embodiments are described in detail to enable practice of the present disclosure. Although the present disclosure is described with reference to these specific preferred embodiments, it will be understood that the present disclosure is not limited to these preferred embodiments. To the contrary, the present disclosure includes numerous alternatives, modifications and equivalents as will become apparent from consideration of the following detailed description.

The term "comprising", as used herein and in the claims, should not be interpreted as being restricted to the means listed thereafter; it does not exclude other elements or steps. It needs to be interpreted as specifying the presence of the stated features, integers, steps, or components as referred to, but does not preclude the presence or addition of one or more other features, integers, steps or components, or groups thereof. Thus, the scope of the expression "a composition comprising components A and B" should not be limited to compositions consisting only of components A and B. It means that with respect to the present disclosure, the only relevant components of the composition are A and B. Accordingly, the terms "comprising" and "including" encompass the more restrictive terms "consisting essentially of" and "consisting of".

In this specification, if any numerical ranges are provided, the ranges include also the upper and lower values. It should be understood that in this specification, the term "at least" encompasses the concept of "equal to and/or more than", and the term "at most" encompasses the concept of "equal to and/or less than".

In the present disclosure, solutions are preferably aqueous solutions, when applicable.

As used herein, the term "and/or," when used in a list of two or more items, means that any one of the listed items can be employed by itself, or any combination of two or more of the listed items, can be employed.

In this document, relational terms, such as first and second, top and bottom, and the like, are used solely to distinguish one entity or action from another entity or action, without necessarily requiring or implying any actual such relationship or order between such entities or actions.

It must be noted that, as used in this specification and the appended claims, the singular forms "a," "an," and "the" include plural referents unless the context clearly dictates otherwise.

The terms "ammonia (NH₃) concentration in a solution", "concentration of NH3_{(aq)}" or the like as used herein refers to the quantified amount of ammonia present in an aqueous solution. This concentration is expressed in grams per liter (g/l) and is determined through titration conducted at room temperature, typically around 20°C.

As previously stated, the present disclosure facilitates both efficient and effective recovery of crystallized potassium sulfate, in addition to contributing to improved water management. It is provided as a method for treating sulfate in an industrial process, the method comprising admixing anhydrous ammonia and a first aqueous solution containing potassium sulfate, thereby obtaining a first slurry comprising a solid phase and a liquid phase, said solid phase comprising precipitated sulfate and said liquid phase comprising ammonia in dissolved form, wherein the first slurry and/or the liquid phase has an ammonia concentration of at least 150 g/l, as determined by titration at room temperature; and removing the solid phase from the first slurry. The solid phase and the liquid phase are then separately recovered.

The method for treating sulfate in an industrial process may be implemented as a method for treating a process stream from an industrial process, wherein the process stream contains potassium sulfate.

The first aqueous solution containing potassium sulfate, as disclosed herein, may be directly obtained from the process streamline, or may undergo pre-treated, such as content and/or condition adjustment.

In the context of the present disclosure, the first aqueous solution containing potassium sulfate, or a process stream containing potassium sulfate, refers to a solution comprising dissolved potassium sulfate, which presents in the form of K⁺ (potassium ions) and SO₄²⁻ (sulfate ions). The first solution contains potassium sulfate. The first solution may contain wastewater from an industrial process, said wastewater containing potassium sulfate. The first solution may be wastewater from an industrial process. The industrial process may be any applicable industrial process, which provides potassium sulfate (K₂SO₄) in a suitable form, which may be an effluent, wastewater, waste solution or the like, of an industrial process.

The industrial process from which the first aqueous solution is obtained may be a precipitation process, for example a process for preparing precursors of cathode active material for secondary batteries, referred to as the co-precipitation process. For example, the co-precipitation process may be done by reacting a transition metal aqueous solution with a potassium hydroxide aqueous solution; wherein the transition metal aqueous solution may be prepared by dissolving one or more transition metal raw material such as nickel sulfate, cobalt sulfate, manganese sulfate, etc. in water, and the potassium hydroxide aqueous solution may be prepared by dissolving potassium hydroxide in water. In such a co-precipitation process, the transition metal aqueous solution, the potassium hydroxide aqueous solution, and optionally ammonium ion-containing solution, are introduced into a reactor to proceed with a co-precipitation reaction. Reaction conditions and methods for precipitation or co-precipitation are generally known. The resulting material of the co-precipitation process is a slurry containing a precipitated material comprising metal hydroxide and a solution containing potassium sulfate. Said transition metal may be one or more of nickel (Ni), cobalt (Co), and manganese (Mn). For example, the transition metal aqueous solution may be prepared by dissolving NiSO₄, CoSO₄ and MnSO₄ into deionized water in the required stoichiometric ratios such that a molar ratio of Ni:Mn:Co is x:y:z, for example 0.10 ≤ x ≤ 0.99, 0.00 ≤ y ≤ 0.85, 0.00 ≤ z ≤ 0.40, x+y+z ≤ 1, wherein A represents at least one dopant. The potassium hydroxide aqueous solution may have a pH value of 10 or more, 11 or more, or 12 or more. The pH value of the aqueous slurry is the pH value as measured on a sample of the aqueous slurry after cooling to 20°C. In such a case, the potassium hydroxide solution may act as a pH controlling agent and/or as a precipitant in the co-precipitation. Optionally, co-precipitation involves introducing an ammonium ion-containing solution. The ammonium ion-containing solution, as a complexing agent, may include, but not be limited to, NH₄OH, (NH₄)₂SO₄, NH₄NO₃, NH₄Cl, CH₃COONH₄, NH₄CO₃, or a combination thereof. For example, the ammonium ion-containing solution may be an ammonia aqueous solution, also known as ammonia water, ammonium hydroxide, ammoniacal liquor, ammonia liquor, aqua ammonia, or aqueous ammonia, i.e. a solution of ammonia in water. It can be denoted by the symbols NH_{3(aq)}. The resulting material of the co-precipitation process is a slurry containing a precipitated material comprising metal hydroxide and a solution containing potassium sulfate. The precipitated material comprising metal hydroxide may be a precursor of cathode active material for secondary batteries. Thus, the industrial process may be a process of battery industry, for example co-precipitation process of precursors, wherein the resulting precipitated material comprising metal hydroxide may contain,
- Ni in a content x, wherein 10.0 ≤ x ≤ 99.0 mol%,
- Mn in a content y, wherein 0 ≤ y ≤ 85.0 mol%,
- Co in a content z, wherein 0 ≤ z ≤ 40.0 mol%,
- Al in a content q, wherein 0 ≤ q ≤ 10.0 mol%, and
- one or more additional elements in a content r, wherein the additional elements are elements from the list of B, Ba, Ca, Ce, Cr, Fe, La, Mg, Mo, Nb, S, Si, Sr, Ti, Y, V, W, Zn, and Zr, wherein 0 ≤ r ≤ 5.0 mol%,
and wherein x + y + z + q + r = 100.0 mol%; and
after removing the precipitates, the remaining solution containing potassium sulfate, also understood as mother liquor, is suitable for being used, directly or after pre-treatment, as the first solution containing potassium sulfate according to the method of the present disclosure. The precipitates and the mother liquor can be separated and recovered by using any suitable methods and devices for separating and recovering solids and liquids, for example by filtering. It is to be understood that other process streams containing potassium sulfate are suitable for being used, directly or after pre-treatment, as the first solution.

According to the present disclosure, the first aqueous solution containing potassium sulfate is mixed with anhydrous ammonia, undergoing a precipitation/salting-out process, thereby obtaining a first slurry comprising a solid phase and a liquid phase, said solid phase comprising precipitated sulfate and said liquid phase comprising ammonia in dissolved form. The solid phase comprising relatively pure crystallized potassium sulfate can be used in fertilizer products and thus has high commercial value. The separated and recovered solid phase may be analyzed for purity with any suitable means. For example, the purity of the potassium sulfate may be analyzed from a sample by using X-ray Powder Diffraction (XRD) and related instrumentation, such as an X-ray powder diffractometer or versatile XRD systems for R&D, to obtain XRD spectra or pattern. This obtained data can be used for evaluating the purity of the potassium sulfate and/or obtaining a mass fraction of the sulfates in the sample to evaluate the conversion degree in the method, success of the method and the like. The proceeding of the reaction, such as the conversion degree during the reaction, may be also monitored and/or estimated by using other means, such as monitoring absorbance and/or turbidity of the reaction mixture, detecting formed precipitate and the like.

It is found that efficient and effective precipitation of potassium sulfate from the solution containing potassium sulfate is achieved by mixing in anhydrous ammonia. It is found that the addition of anhydrous ammonia in a quantity that results in an ammonia concentration of at least 150 g/l in the first slurry and/or the liquid phase, as determined by room temperature titration, facilitates a high conversion rate of sulfate from the initial solution to the resultant precipitated sulfate, indicating a high yield of precipitated sulfate, preferably precipitated potassium sulfate, and/or effective removal of sulfate from the solution. As appreciated by the skilled person the ammonia concentration in a solution (NH_{3(aq)} concentration) can be measured by using a commercially available titrator, for example Metrohm 848 Titrino Plus.

Commercially available anhydrous ammonia is typically stored under high pressure in liquid form within specialized containers; upon release into the atmosphere, it swiftly transitions into a gaseous state. Both liquid ammonia and gaseous ammonia dissolve readily in water. Various ways of mixing anhydrous ammonia, either in liquid form or in gaseous form, and a solution may be implemented and may be chosen according to the applications. As gaseous ammonia is around 40 percent lighter than air, anhydrous ammonia may be supplied to be in contact with the first aqueous solution, for example, through an inlet that opens below the solution level, or through a porous diffuser into the solution from the bottom. In addition or alternatively, the first aqueous solution and the anhydrous ammonia may be supplied into a sealable reaction vessel to avoid escape of gas, and the sealable vessel also ensures controlled conditions and containment during the reaction. These make use of anhydrous ammonia even more efficiently and effectively. Mechanical agitation, for example by using a stirrer, impeller, or magnetic stir bar to create turbulence in the solution, may be used. Thus, in some embodiments, in the method according to the present disclosure, the admixing the anhydrous ammonia and the first aqueous solution comprises steps of: a) providing the first aqueous solution containing potassium sulfate into a sealable reaction vessel; b) supplying anhydrous ammonia into the reaction vessel; and c) mixing the first aqueous solution and the anhydrous ammonia at a pressure equal to or exceeding atmospheric pressure inside the reaction vessel. The reaction vessel may be configured to adjust pressure inside the reaction vessel, so that the mixing the first aqueous solution and the anhydrous ammonia at a pressure equal to or exceeding atmospheric pressure inside the reaction vessel.

It is observed that a surprising significant improvement in conversion rate of sulfate from the first aqueous solution to the resultant precipitated sulfate is achieved when the concentration of ammonia in the first slurry and/or the liquid phase is at least 150 g/l, which contributes to a conversion rate of about 96%, which means that the majority of the sulfate in the first aqueous solution can be removed, as well as a high yield of precipitated sulfate, preferably precipitated potassium sulfate. Advantageously, the concentration of ammonia in the first slurry and/or the liquid phase is 155 g/L or more, such as at least 160, 170, 180, 190, 200, 210, 220, 230, 240, 250, 260, 270, 280, 290, or 300 g/L. It is observed, that the higher the concentration of ammonia in the first slurry and/or the liquid phase, the better the conversion rate of sulfate. There is no particular upper limit of the concentration of ammonia in the first slurry and/or the liquid phase, above which the conversion rate would be deteriorated. On the other hand, it is observed that that the concentration as high as 250 - 400 g/l would contribute to the conversion rate to about 100%. Thus, the preferable range is within 250 - 400 g/l, such as 270 - 350 g/l. In this context it is advantageous to use anhydrous ammonia in the method, as it is easier to tailor the ammonia concentration on-site especially when a higher concentration is desired. Also, it is advantageous to conduct the method in a sealable reaction vessel configurable to adjust pressure inside the reaction vessel, such that the mixing may be conducted at a pressure equal to or exceeding 1.013 bar, preferably in a range of 1.05 to 4.5 bar, for example equal to or more than 1.10, 1.20, 1.30, 1.40, or 1.50 bar, and/or up to 1.9, 2.0, 3.0, or 4.0 bar. The gas dissolves in water better under pressure. When the pressure of a gas above a liquid level increases, the solubility of the gas in the liquid also increases. The process according to the present disclosure can be carried out in any suitable means, for example in an autoclave reactor. Based on the knowledge of the kinetics of the reaction, the skilled person would use suitable reactor types.

To further optimize the utilization of ammonia, it is preferable to conduct the method at a temperature in favor of solubility of NH₃. In addition, lower temperatures also facilitate the decreased solubility of potassium hydroxide. Thus, in an embodiment, the admixing is conducted at a temperature in a range of 2-30 °C, such as 2-25 °C. On the other hand, active cooling to a temperature under 15 °C may not be needed, so as to avoid extra energy consumption. Therefore, preferably the temperature is in the range of 15-22 °C. The temperature may be maintained at the interval of said disclosed ranges throughout the mixing.

According to the present method, the precipitation/salting-out process may be further improved, in turns of efficiency, by adjusting the concentration of the elements in the first aqueous solution comprising potassium sulfate before the mixing step. For example, by concentrating, preferably by evaporating, the concentration of elements in the first aqueous solution may be increased. Advantageously, a concentration of the sulfur in the first aqueous solution is 15.00 g/L or more, such as in the range of 15.00-30.00 g/L, or 20.00 g/L or more, such as in the range of 20.00-50.00 g/L, as determined by ICP; and/or wherein a concentration of the potassium in the first aqueous solution is 40.00 g/L or more, such as in the range of 40.00-80.00 g/L, or 50.00 g/L or more, such as in the range of 50.00-95.00 g/L, as determined by ICP.

According to the present method, when the relatively pure precipitated potassium sulfate is desired, it is advantageous that the concentration of other elements than sulfur and potassium in the first aqueous solution is low, for example at most 5.00 g/l, preferably at most 2 g/l, and more preferably at most 1 g/l, and most preferably at most 0.5 g/l, as determined by ICP. Ways of selective extraction of an element from a solution are generally known in the art.

As previously mentioned, the industrial process may be a process of battery industry wherein a co-precipitation process is done by reacting an aqueous solution comprising transition metal sulfate and an alkaline solution comprising potassium hydroxide, thereby obtaining a slurry comprising a mother liquor and precipitated material being a particulate hydroxide and/or oxyhydroxide of the transition metal; said transition metal comprising at least one of Ni, Mn, and Co. Said mother liquor generally has a relatively higher concentration of sulfur and potassium, such as in the ranges as defined in the claims, and a relatively lower concentration of other elements than sulfur and potassium, such as in the ranges as defined in the claims. Therefore, it is advantageous to implement the present method wherein the industrial process is a process of battery industry, and/or wherein the first aqueous solution is obtained from a mother liquor, which may be referred as alkaline waste sulfate solution, of said co-precipitation process.

The first aqueous solution may be alkaline. The first aqueous solution may be or may comprise a potassium sulfate solution being formed as a by-product in battery material industry, where alkali, e.g. KOH, is used in the industrial process and renders the first aqueous solution alkaline. By being alkaline it is meant the pH of the solution is at an alkaline range, such as pH of 9 or more, 10 or more, 11 or more, or 12 or more, as determined at 20°C.

The first aqueous solution may also be not alkaline. In such a case, the first aqueous solution may be made alkaline before the mixing step. Thus, the method according to the present disclosure is also suitable for treating a first aqueous solution containing potassium sulfate obtained from an industrial process, wherein the first aqueous solution is not alkaline.

According to the present disclosure, the obtained first slurry comprises a solid phase and a liquid phase, said solid phase comprising precipitated sulfate and said liquid phase comprising ammonia in dissolved form. The solid phase and the liquid phase can be separated and recovered by using any suitable methods and devices for separating and recovering solids and liquids, for example by filtering. Thus, removing the solid phase from the first slurry may be done by filtering the first slurry.

The obtained solid phase comprising potassium sulfate may be used in fertilizer products and thus has high commercial value. Preferably, the solid phase comprises potassium of at least 40 wt.%, as determined by ICP, so that it is readily suitable to be used as fertilizer.

The filtering process and equipment are generally known in the field. An example is provided below. Slurries are filtrated in a dewatering process to separate the solid particles from the liquid. The dewatering process may be realized by a belt filter having a moving endless filter cloth having a feed end onto which the slurry is distributed. The liquid of the slurry filtrates through the filter cloth permeable to the liquid, whereby a filter cake containing solid particles of the slurry is formed onto the filter cloth. The filter cake can then be washed in a washing phase by passing washing liquid through the filter cake, while the cake is resting on the moving filter cloth. The filtration of the liquids through the filter cloth is often enhanced by creating a partial vacuum on another side of the filter cloth than onto which the filter cake is formed. At the discharge end of the belt filter the filter cake is removed from the filter cloth and possibly conveyed to further processing phases outside the belt filter such as to an additional drying phase.

The purity of the precipitated potassium sulfate may be increased by a washing procedure to remove surface impurities or impurities attached inside the crystal. Accordingly, in some embodiments of the present disclosure, the method further comprises recovering the solid phase and washing the recovered solid phase with a washing liquid, wherein said washing liquid does not dissolve or react with potassium sulfate. In addition or alternatively, the purity of the precipitated potassium sulfate may be increased by a recrystallization procedure. An example of such recrystallization procedure may be: dissolving the compound in an appropriate hot solvent; allowing the solution to cool and allowing the compound to crystallize out; isolating the crystals by filtration; washing the surface of the crystals with cold solvent to remove residual impurities; drying the crystals.

According to the present disclosure, the method further comprises separating ammonia from the liquid phase, preferably by ammonia stripping. Ammonia stripping is generally well known to separate the gaseous NH₃ from the liquid phase. Subsequently, anhydrous ammonia can be obtained and reused in the method for treating sulfate or upstream the method for treating sulfate, for example to make an ammonia aqueous solution to be used as a complexing agent in the co-precipitation of precursors.

According to the present disclosure, the method further comprises reusing a fraction of the liquid phase upstream the method for treating sulfate, for example to make an ammonia aqueous solution to be used as a complexing agent in the co-precipitation of precursors, wherein the fraction of the liquid phase may be diluted to a suitable concentration for serving as the complexing agent.

### Examples

The present disclosure is further illustrated with reference to some examples and comparative examples.

### Measurement methods used in the examples

### NH_{3(aq)} concentration analysis

The NH₃(_{aq}) concentration was measured from a sample by end point titration using an instrument of Metrohm 848 Titrino Plus. 1 mL of a solution containing the NH₃ content to be measured was added to a titration vessel, followed by adding 30-40 mL of deionized water and 1 mL of 1M NaOH. The obtained sample was titrated to the end point by 0.1M HCl.

### X-ray diffraction analysis

The XRD spectra of the samples were measured with an X-ray diffractometer EMPYREAN^{®} by a manufacturer of PANalytical with the conditions as described in Table 1 below.

**Table 1 XRD measurement conditions**

| Anode material | Co |
|---|---|
| K-Alpha 1 wavelength | 1.78901 Å |
| Generator voltage | 40 kV |
| Tube current | 45 mA |
| Scan Range | 10-90 ° |
| Scan Step Size | 0.0130 ° |
| Scan step time | 178.24 s |
| Divergence slit | 0.355 ° |
| detector opening | 3.3482 ° |
| primary soller slit | 0.04 |

### Elemental composition analysis

The contents of K, Na and S in the obtained solid fraction and liquid fraction samples were measured by the Inductively Coupled Plasma - Optical Emission Spectrometry (ICP-OES) method using an Thermo iCAP 6000 Series ICP-OES instrument.

The measurement sample was prepared as follows for solid samples: 0.25 gram of a powder sample of each example was dissolved into deionized (DI) water in a 100 mL volumetric flask. The volumetric flask was filled with deionized (DI) water up to the 100 mL mark, followed by complete homogenization. 1 mL of the solution was taken out by a pipette and transferred into a 100 mL volumetric flask for the second dilution. An appropriate amount of concentrated nitric acid was added by a pipette to achieve 5% HNO₃ solution when brought to volume with deionized water (DI) and then homogenized. Finally, this solution was used for the ICP-OES measurement. The contents of K, Na and S are expressed as %.

The measurement sample was prepared as follows for liquid samples: 1 mL of liquid sample was taken out by a pipette and transferred into a 100 mL volumetric flask. The volumetric flask was filled with deionized (DI) water up to the 100 mL mark, followed by complete homogenization. An appropriate amount of the solution was taken out by a pipette and transferred into a 100 mL or 250 mL volumetric flask for the second dilution. An appropriate amount of concentrated nitric acid was added by a pipette to achieve 5% HNO₃ solution when brought to volume with deionized water (DI) and then homogenized. Finally, the solution was used for the ICP-OES measurement. The contents of Co, Mn, Ni, K, Na and S are expressed as g/L.

### Preparation example 1

First, a transition metal aqueous solution was prepared by dissolving NiSO₄, CoSO₄ and MnSO₄ into deionized water in the required stoichiometric ratios such that a molar ratio of Ni:Mn:Co in the 120 g/L resulting solution was 0.90:0.05:0.05. Then precipitation of a transition metal hydroxide was conducted by continuously feeding the transition metal aqueous solution, 220 g/L ammonia water and 220 g/L potassium hydroxide aqueous solution to a reaction vessel equipped with baffles, a six-bladed turbine and a concentrator through which mother liquor can be withdrawn from the reaction vessel, and mixing such that the NH₃ concentration of the reaction mixture, i.e. aqueous slurry, was 3-5 g/L and the pH was 10.9±0.2, respectively. The pH value of the aqueous slurry is the pH value as measured on a sample of the aqueous slurry at 20°C. The precipitation was ended when an average particle diameter (D50) of the transition metal hydroxide reached approximately the target value of 5.0 µm. Throughout the precipitation, the mixing was done by rotating the turbine at 1050 rpm, the temperature of the slurry was kept at 85 °C inside the reaction vessel by heating and respectively an inert atmosphere was ensured by circulating nitrogen gas through the vessel. Thus, the transition metal hydroxide was obtained, and mother liquor (alkaline waste sulfate solution) was recovered from the slurry by filtering.

The recovered mother liquor was analyzed by the ICP-OES analysis method as described above; the results are reported in Table 2.

**Table 2. The content of the mother liquor (i.e. alkaline waste sulfate solution from the Preparation example 1) used in Comparative example 1**

| Mother liquor | Co (g/L) | Mn (g/L) | Ni (g/L) | K (g/L) | Na (g/L) | S (g/L) |
|---|---|---|---|---|---|---|
| Preparation example 1 | 0.0002 | 0.0001 | 0.0014 | 44.17 | 0.38 | 19.88 |

### Preparation example 2

First, a transition metal aqueous solution was prepared by dissolving NiSO₄, CoSO₄ and MnSO₄ into deionized water in the required stoichiometric ratios such that a molar ratio of Ni:Mn:Co in the 120 g/L resulting solution was 0.94:0.03:0.03. Then precipitation of a transition metal hydroxide was conducted by continuously feeding the transition metal aqueous solution, 220 g/L ammonia water and 220 g/L potassium hydroxide aqueous solution to a reaction vessel equipped with baffles, a six-bladed turbine and a concentrator through which mother liquor can be withdrawn from the reaction vessel, and mixing such that the NH₃ concentration of the reaction mixture, i.e. aqueous slurry, was 3-5 g/L and the pH was 11.7±0.2, respectively. The precipitation was ended when an average particle diameter (D50) of the transition metal hydroxide reached approximately the target value of 3.5 µm. Throughout the precipitation, the mixing was done by rotating the turbine at 1000 rpm, the temperature of the slurry was kept at 85 °C inside the reaction vessel by heating and respectively an inert atmosphere was ensured by circulating nitrogen gas through the vessel. Thus, the transition metal hydroxide was obtained, and mother liquor (alkaline waste sulfate solution) was recovered from the slurry by filtering.

The recovered mother liquor was analyzed by the ICP-OES analysis method as described above; the results are reported in Table 3.

**Table 3. The content of the mother liquor (i.e. alkaline waste sulfate solution from the Preparation example 2) used in Examples 1.1-1.5**

| Mother liquor | Co (g/L) | Mn (g/L) | Ni (g/L) | K (g/L) | Na (g/L) | S (g/L) |
|---|---|---|---|---|---|---|
| Preparation example 2 | 0.0141 | 0.0046 | 0.5028 | 42.61 | 1.208 | 12.88 |

### Comparative Example 1

First, 1.5 L of the mother liquor of the Preparation example 1 and 1.5 L of 25 wt.% ammonia water was added to an airtight-sealed Erlenmeyer flask and mixed 30 minutes to obtain fully stirred mixture. Then, after two hours staying in the room temperature, e.g. around 18 °C to 22 °C, the mixture was Büchner filtered to separate the solid and liquid fractions. Before the filtering, the NH₃ concentration of the mixture was analyzed, the result was 97 g/L.

The analysis of the obtained solid and liquid fractions, including X-ray diffraction (XRD) for the solid fraction and Inductively Coupled Plasma (ICP) of the elemental composition analysis for the solid and liquid fractions, were conducted as described above and the results are given in Table 5. Table 5 reports also the amount (in grams) of the obtained solid fraction and the conversion percentage of sulfate from the mother liquor to the obtained solid fraction, calculated by using the measured ICP results for the sulfur contents in the mother liquor and the filtrate.

### Example 1

Six separate experiments, Examples 1.1-1.6, were conducted in a reactor autoclave equipped with a cooling system, a controlling unit, and a gas-entrainment impeller. In each experiment, 150 mL of the mother liquor of the Preparation example 2 was added into the autoclave. Then, the autoclave was closed and placed in its holder. Temperature and pressure sensor wires, a gas hose linked to an ammonia gas source, and cooling hoses linked to a cooling system, and a mixer were attached to the autoclave. The cooling system was turned on. The mixer was switched on, and the rotation frequency was set to 500 rpm. An autoclave control unit was switched on for monitoring the readings given by the temperature and pressure sensors and for adjusting the temperature and the pressure.

In Example 1.2-1.6, ammonia gas was fed into the autoclave, firstly expelling the air from the autoclave, and then continuing feeding until the pressure in the autoclave reached the target value. The autoclave pressure was maintained, and the autoclave was cooled to the desired temperature. The mixing was continued for 30 minutes, and then the experiment was terminated.

In Example 1.1, ammonia gas was fed into the autoclave with an outlet valve open throughout the experiment, and the mixing was continued for 30 minutes, and then the experiment was terminated.

The recorded pressure and temperature of each example are shown in Table 4.

After terminating the reaction, the solution, a slurry comprising a solid phase and a liquid phase, inside the autoclave was transferred to suction filtration.

The similar analysis of the obtained solid and liquid fractions as in the Comparative Example 1 was conducted and the results are given in Table 5.

**Table 4. The recorded values of pressure and temperature in Examples 1.1-1.6**

| Example | Measured pressure (bar) | measured temperature (°C) |
|---|---|---|
| Ex 1.1 | - | 19.0 |
| Ex 1.2 | 1.5 | 19.0 |
| Ex 1.3 | 1.3 | 20.4 |
| Ex 1.4 | 1.9 | 16.9 |
| Ex 1.5 | 2.9 | 18.6 |
| Ex1.6 | 3.9 | 19.6 |

**Table 5. The analysis results of the obtained solid and liquid fractions of Example 1 (Ex 1.1 - Ex 1.6) and Comparative Example (CEx 1)**

| Exam ple | NH₃ conce ntratio n in solutio n (g/l) | Obtain ed solid (g) | Conve rsion of SO₄ (%) | XRD analysis, main phase | ICP analysis (filtrate) | | ICP analysis (solid) | |
|---|---|---|---|---|---|---|---|---|
| | | | | | K (g/L) | S (g/L) | K (wt.%) | S (wt.%) |
| Ex 1.1 | 272 | 11.8 | 97.2 | K₂SO₄ | 0.6167 | 0.3638 | 42.9 | 16.71 |
| Ex 1.2 | 273 | 13.3 | 97.7 | K₂SO₄ | 0.67 | 0.2973 | 46.24 | 18.05 |
| Ex 1.3 | 267 | 12.5 | 99.7 | K₂SO₄ | 0.8389 | 0.0399 | 48.42 | 17.33 |
| Ex 1.4 | 272 | 13.1 | 100.0 | K₂SO₄ | 0.494 | 0.0003 | 48.33 | 16.52 |
| Ex 1.5 | 338 | 13.3 | 100.0 | K₂SO₄ | 0.534 | 0.002 | 49.19 | 17.57 |
| Ex 1.6 | 327 | 13.3 | 99.9 | K₂SO₄ | 0.502 | 0.014 | 45.42 | 16.44 |
| CEx 1 | 97 | 99.0 | 83.1 | K₂SO₄ | 8.56 | 3.36 | 45.39 | 18.27 |

Referring to Table 5, the removal of sulfate from the alkaline waste sulfate solution was improved in every Examples 1.1-1.6 compared to the sulfate removal of the Comparative example. Further, considering the possible error margin of experimental data, it can be concluded that NH_{3(aq)} concentration recorded in Ex 1.1-1.6 contributes to almost complete removal of sulfate ions from the solution. It is reasonably derivable that a concentration of at least 150 g/l results in a very satisfactory conversion rate in view of the industrial applications.

## Claims

1. A method for treating sulfate in an industrial process, the method comprising admixing anhydrous ammonia and a first aqueous solution containing potassium sulfate, thereby obtaining a first slurry comprising a solid phase and a liquid phase, said solid phase comprising precipitated sulfate and said liquid phase comprising ammonia in dissolved form, wherein the first slurry and/or the liquid phase has an ammonia concentration of at least 150 g/l, as determined by titration at room temperature; and removing the solid phase from the first slurry.

2. The method according to claim 1, wherein admixing the anhydrous ammonia and the first aqueous solution comprises steps of:
a) providing the first aqueous solution containing potassium sulfate into a sealable reaction vessel configurable to adjust pressure inside the reaction vessel;
b) supplying anhydrous ammonia into the reaction vessel; and
c) mixing the first aqueous solution and the anhydrous ammonia at a pressure equal to or exceeding atmospheric pressure inside the reaction vessel.

3. The method according to any of the preceding claims, wherein admixing is conducted at a temperature in a range of 2-30 °C, such as 2-25 °C; preferably, the temperature is in a range of 15-22 °C.

4. The method according to any of the preceding claims, wherein the precipitated sulfate is precipitated potassium sulfate.

5. The method according to any of claims 2-4, wherein the pressure is equal to or exceeding 1.013 bar, preferably in a range of 1.05 to 4.5 bar, for example equal to or more than 1.10, 1.20, 1.30, 1.40, or 1.50 bar, and/or up to 1.9, 2.0, 3.0, or 4.0 bar.

6. The method according to any of the preceding claims, wherein a concentration of sulfur in the first aqueous solution is 15.00 g/L or more, such as in a range of 15.00-30.00 g/L, or 20.00 g/L or more, such as in a range of 20.00-50.00 g/L, as determined by ICP; and/or wherein a concentration of potassium in the first aqueous solution is 40.00 g/L or more, such as in a range of 40.00-80.00 g/L, or 50.00 g/L or more, such as in a range of 50.00-95.00 g/L, as determined by ICP.

7. The method according to any of the preceding claims, wherein a concentration of at least an element other than sulfur and potassium, preferably all other elements than sulfur and potassium, in the first aqueous solution is at most 5.00 g/l, preferably at most 2 g/l, and more preferably at most 1 g/l, and most preferably at most 0.5 g/l, as determined by ICP.

8. The method according to any of the preceding claims, wherein the first aqueous solution has a pH value of at least 9, such as pH 9 or more, pH 10 or more, pH 11 or more, or pH 12 or more, as determined at 20°C.

9. The method according to any of the preceding claims, wherein the first slurry and/or the liquid phase has an ammonia concentration of 155 g/L or more, such as 160, 170, 180, 190, 200, 210, 220, 230, 240, 250, 260, 270, 280, 290, or 300 g/L, such as in a range of 200-550 g/L; preferably, the concentration is at most 400 g/l, such as at most 350 g/l.

10. The method according to any of the preceding claims, wherein the removing the solid phase from the first slurry comprises filtering the first slurry.

11. The method according to any the preceding claims, further comprising recovering the solid phase; preferably further comprising washing the solid phase with a washing liquid.

12. The method according to any of preceding claims, further comprising separating ammonia from the liquid phase, preferably by ammonia stripping.

13. The method according to claim 12, wherein separating ammonia from the liquid phase is done by ammonia stripping, wherefrom anhydrous ammonia is obtained and reused in the method for treating sulfate or upstream the method for treating sulfate.

14. The method according to any of preceding claims, further comprising reusing a fraction of the liquid phase upstream the method for treating sulfate.

15. The method according to any of the preceding claims, wherein the industrial process is a process of battery industry, preferably wherein the first aqueous solution is obtained from a mother liquor of a co-precipitation process, wherein said co-precipitation process is done by reacting an aqueous solution comprising transition metal sulfate and an alkaline solution comprising potassium hydroxide, thereby obtaining a slurry comprising the mother liquor and precipitated material being a particulate hydroxide and/or oxyhydroxide of the transition metal; said transition metal comprising at least one of Ni, Mn, and Co.
